Europäisches Patentamt

European Patent Office

Office européen des brevets

(19)

(11) Publication number: 0 199 498
A2

# (12) EUROPEAN PATENT APPLICATION

(21) Application number: 86302634.0

(22) Date of filing: 09.04.86

(51) Int. Cl.4: **B29C 65/18** ,
//(B29L23/00,B29K105:02)

(30) Priority: 11.04.85 GB 8509234

(43) Date of publication of application:
29.10.86 Bulletin 86/44

(84) Designated Contracting States:
BE FR GB NL

(71) Applicant: DOBOY LIMITED
Sunderland Road Middlefield Industrial
Estate
Sandy, Beds. SG19 1RB(GB)

(72) Inventor: Prottengeir, Manfred
Kiebitzweg 16-18 PO Box 1160
D-2000 Schenfeld Bez, Hamburg(DE)

(74) Representative: Selby-Lowndes, Guy Francis
Charles
Moonrakers Durfold Wood
Plaistow Billinghurst West Sussex RH14
0PL(GB)

(54) Packaging machinery.

(57) A method for packaging articles of the type in which layers of plastic film are compressed between a heated welding bar and a deformable counterpressure bar to form a straight welding seam. The plastic film used is a biaxially oriented polyolefin film, the deformable counterpressure bar is a poor thermal conductor and the welding bar is held at a temperature not greater than 150 degrees Celcius during the welding operation. Preferably the temperature of the welding bar is maintained between 130 and 140 degrees Celcius. The polyolefin may be a polypropylene or a polyethylene biaxially oriented film. Preferably the degree of orientation is such that the film shrinks linearly by from 70% to 30%. Most preferably the film shrinks 60% on the application of heat. The films used may vary in thickness from 100 micrometres to 12 micrometres.

## PACKAGING MACHINERY

This invention relates to packaging and similar machines for wrapping and sealing articles in plastic film and their method of use.

In one well known packaging technique articles to be packaged, such as trays of cans, are urged towards a curtain of plastic film. The film is wrapped around the article by known means and the join where the two edges of the plastic film meet is welded to form a solid seam. Usually a heated wire or strip is used to fuse the plastic film and form the weld along the seam. After the film wrapping the article has been welded the whole package is heated, for example by passage through an oven, to cause the wrapping film to shrink and so to form a tight enclosure for the wrapped article. This shrinking process tensions the plastic film and puts a strain on the weld which should not rupture at any point along its length.

Successive welded sections of plastic film must normally be separated so that it is common to make a double weld and divide the plastic film between them. Such separation may be made by a heated wire, a heated knife, a moving knife or other divisive means. Such techniques are described in German published patent applications - (Offenlegensschriften) numbers 28 01 201; 10 78 318 and United Kingdom patent 1,273,245. A particularly effective and useful welding and dividing apparatus and method is described in German patent application [OLS] number 34 09 702.

In most packaging applications the plastic film used to wrap articles is a biaxially oriented polyolefin film. Such films are thermoplastic enabling welding and cutting operations to be carried out by the application of heat. The most popular polyolefin films are polyethylene and polypropylene films which have been biaxially oriented during manufacture. The application of heat causes the film to relax losing some of its biaxial orientation and shrink. When the wrapped film shrinks it conforms to the shape of the article it envelopes. The shrinkage places a considerable strain on the seam. As the temperature used to form the weld in presently used apparatus, 230 to 250 degrees Celcius, is sufficiently high to destroy all orientation there is usually a weakness at the seam so that it is liable to rupture partially or completely. The problem becomes more acute as the thickness of the wrapping polyolefin film is reduced. Currently it is extremely difficult or impossible to package articles using films thinner than 40 micrometres.

The high welding temperatures used on present machines together with the poor temperature control cause pyrolysis of the film giving rise to noxious fumes and decomposition products which foul the welding element and necessitate frequent cleaning.

The present invention provides a method for packaging articles of the type in which layers of plastic film are compressed between a heated welding bar and a deformable counterpressure bar to form a straight welding seam, characterised in that, the plastic film is a biaxially oriented polyolefin film, the deformable counterpressure bar is a poor thermal conductor and the welding bar is held at a temperature not greater than 150 degrees Celcius during the welding operation.

Preferably the temperature of the welding bar is maintained between 130 and 140 degrees Celcius. The polyolefin may be a polypropylene or a polyethylene biaxially oriented film. Preferably the degree of orientation is such that the film shrinks linearly by from 70% to 30%. Most preferably the film shrinks 60% on the application of heat. The films used may vary in thickness from 100 micrometres to 12 micrometres.

In the most preferred embodiment of the invention the welding bar contains heating means, such as an electric resistance element, and at least one temperature sensing element for controlling the supply of power to the heating means. By this means the temperature along the welding bar can be kept at a constant value regardless of the rate at which the packaging machine is being operated. The temperature is kept in the range 130 to 140 degrees Celcius the exact value depending upon the characteristics of the polyolefin film being used.

While a single weld can be made according to the invention, it is preferred to make double welds which may be divided. The preferred welding device has a welding bar carrying a welding and separating strip which has a wedge-shaped separating knife in the centre and on each side of the knife a welding strip. The welding strip is shorter than the separating knife and rounded with a radius which is equal to half the thickness of the welding strip. The curved surface of the welding strips joins the flat outer surface of the wedge at a point equal to its radius of curvature below the top of the curved surface. Such devices are described and illustrated in greater detail in OLS 34 09 702.

To prevent adhesion between the plastic film and the heated welding bar the bar should carry a non-adhesive coating. Polytetrafluoroethylene - (PTFE) is a preferred substance for this purpose.

Adhesion to the counterpressure bar should also be prevented with the use of a flexible non-adhesive coating or surface layer. A PTFE film reinforced with glass fibres is most suitable.

The counterpressure bar is preferably formed from a cylinder of silicone rubber as described in German OLS 34 09 702. The rubber has a Shore Hardness in the range 20 to 60. When the welding bar and the counterpressure bar are pressed together to weld the film pressure is exerted along the line joining the two bars. To ensure that the two films have flowed into each other and formed a weld the pressure between the bars is maintained for a period of from 0.4 to 1.5 seconds. The temperature used will depend upon the thickness of the films being welded and certain other physical characteristics such as the melt flow index and density.

Using commercial low density polyethylene film, 60 micrometres thickness, pressure is exerted for 0.5 seconds with the welding bar held at 130 degrees Celcius. Good quality seals are obtained at an overall machine speed of 28 packs per minute with 100 mm high packs. The height of the pack being sealed affects the pack speed and cooling time as the linear speed of the moving welding bar and counterpressure bar must increase with pack height.

Welds prepared according to the method of the invention may be from 0.5 to 5 mm wide according to the thickness of the film being welded. The strength of a weld is dependant upon its quality as much as its width. Welds made according to the invention have great uniformity and consistency so that they have high strength even when narrow. Such narrow welds are preferred as this results in cost savings.

**Claims**

1. A method for packaging articles of the type in which layers of plastic film are compressed between a heated welding bar and a deformable counterpressure bar to form a straight welding seam characterised in that, the plastic film is a biaxially oriented polyolefin film, the deformable counterpressure bar is a poor thermal conductor and the welding bar is held at a temperature not greater than 150 degrees Celcius during the welding operation.

2. The method according to claim 1 characterised in that the temperature of the welding bar is held between 130 and 140 degrees Celcius during the welding operation.

3. The method according to claims 1 or 2 characterised in that the the polyolefin is polypropylene or polyethylene.

4. The method according to claim 3 characterised in that the degree of orientation is such that the film shrinks linearly by from 70% to 30%.

5. The method according to claim 4 characterised in that the film shrinks linearly by 60%.

6. The method according to any of the preceding claims characterised in that the film thickness lies in the range 12 to 100 micrometres.

7. The method according to any of the preceding claims characterised in that the layers of film are compressed between the bars for a period of from 0.4 to 1.5 seconds.

8. The method according to any of the preceding claims characterised in that the width of the welding seam is from 0.5 to 5mm.

9. The method according to any of the preceding claims characterised in that the surface of the welding bar in contact with the film is coated with polytetraflouroethylene.

10. Articles packaged in welded plastic film characterised in that the welds have been prepared by the method of any of the claims 1 to 9.